# EUROPEAN PATENT SPECIFICATION

(11) **EP 4 566 798 B1**
(45) Date of publication and mention of the grant of the patent: **09.09.2026**
(21) Application number: 24204459.2
(22) Date of filing: 03.10.2024
(51) Int. Cl.: B29C 65/02, B29C 65/08, B29C 65/14, B29C 65/16, B29C 65/78, B65B 7/28, B65B 51/10, B65B 51/22, B29L 31/00, B29L 31/14

(54) **METHOD FOR AUTOMATIC WELDING OF A PLASTIC PARTS ASSEMBLY AND DEVICE THEREFOR**
VERFAHREN ZUM AUTOMATISCHEN SCHWEISSEN EINER KUNSTSTOFFTEILEANORDNUNG UND VORRICHTUNG HIERFÜR
PROCÉDÉ DE SOUDAGE AUTOMATIQUE D'UN ASSEMBLAGE DE PIÈCES EN PLASTIQUE ET DISPOSITIF ASSOCIÉ

(30) Priority: 06.12.2023 CZ 20230469
(43) Date of publication of application: 11.06.2025
(73) Proprietor: VÚTS, a.s., Liberec XI - Ruzodol I 460 01 Liberec (CZ)
(72) Inventor: Kloucek, Vojtech, 464 01 Frydlant (CZ); Folprecht, Vojtech, 460 05 Liberec, Liberec V-Kristianov (CZ); Fabera, Jaroslav, 460 14 Liberec, Liberec XIV-Ruprechtice (CZ); Dvorak, Libor, 460 01 Liberec, Liberec I-Stare Mesto (CZ)
(74) Representative: Musil, Dobroslav

(56) References cited:
- DE-A1- 10 206 261
- KR-B1- 101 890 529
- US-A- 4 515 651

## Description

### Technical field

The invention relates to a method for automatic welding an assembly of plastic parts, wherein the assembly includes a hollow container or cartridge or cylindrical housing and a plate cover or a plate separating baffle and which further comprises an internal element arranged between the hollow container or the cartridge or the cylindrical housing and the plate cover or the plate separating baffle, in which the assembly is initially placed to a pick-up point from which it is subsequently automatically moved up to a welding position where the assembly is automatically clamped and the parts are automatically welded, whereupon the welded assembly automatically moves back to the pick-up point from which it is removed to be further processed.

In addition, the invention relates to a device for automatic welding an assembly of plastic parts which comprises a frame with a starting point of the assembly and a welding position arranged on the frame, the starting point and the welding position being interconnected by a positioning device, wherein a welding unit is further mounted on the frame, and the device further comprises a control system provided with software to which the positioning device and the welding unit are coupled.

### Background art

Joining plastic parts using energy beam, e.g., ultrasound, laser, etc., is fast, precise and does not require the use of additional material to create the joint. It is used, among other things, for welding specific assemblies of plastic parts, such as cylindrical housings with plate covers or plate separating baffles.

JP2014177051A discloses a method for laser welding a lid with a housing, where the lid is made of a laser transparent material and the housing is made of a laser absorbing material. The cover is pressed against protrusions created on the edge of the housing by means of a system of pressure elements, and subsequently is spot-welded with the protrusions by the simultaneous action of a plurality of laser beams, thereby being fixed in the selected position. The pressure jigs are then released and the cover is welded to the edge of the housing with a single laser around the entire circumference. The disadvantage of this method for welding is that it is time-consuming and that it requires a device with a plurality of pressure jigs and a plurality of point laser sources.

CN109367028A discloses a laser welding device for plastic welding, comprising a laser welding device and a sliding rail. The rail is provided with a pair of jaws for clamping the workpiece to be welded and is further provided with a micro electric rotating table for rotating the plastic workpiece clamped in the jaws during welding, when a welded joint is formed on the opposite side of the plastic workpiece. The jaws are clamped by spring pressure, and so it is not possible to clamp plastic workpieces of different sizes with one device with preset spring pressure. In addition, the springs do not always achieve a sufficiently high precision of jaw pressure on the plastic workpiece, because the springs are subject to wear over time and their stiffness and pressure force uncontrollably decrease.

KR10189052981 discloses a laser welding device with a welding unit, an elevating unit and a rotating table on whose circumference first to fourth clamp modules with welding jigs are arranged. The elevating unit comprises a cylinder provided with an elevating rod with an end piece, wherein a load gauge is arranged between the elevating rod and the end piece for adjusting the mutual pressure of the welded parts. The assembly to be welded is placed into the welding jig in the clamp module by a robotic arm and clamped into it. The rotating table is then rotated and the clamp module is positioned vertically between the elevating unit and the welding unit. Then the clamp module with the welding jig and the assembly to be welded is lifted upwards by the elevating unit to the welding position, where the assembly to be welded is tightly attached to the replaceable upper welding jig, which is stored in the frame of the machine. At the same time, the pressure of the elevating unit on the lower welding jig is measured with the load gauge and a corresponding signal is generated. The movement of the cylinder of the elevating unit is controlled to ensure the correct movement of the lower jig against the upper jig. The table is rotated to the next position and the welded assembly is removed by the robotic arm for further processing. The device with four clamp modules on the rotating table is relatively bulky and requires rather large built-in space. Moreover, the device requires robotic hand operation and its integration into the existing plastic welding line in place of another device is not entirely easy. Another disadvantage appears to be the need to use a moving laser welding head, in addition to the possibility of simultaneous welding of more points. Also, the transmission of the signal from the load gauge on the moving rod of the elevating device to the control system is not easy, or it requires wireless data transmission with the risk of industrial signal interference. Furthermore, controlling the drive of the elevating unit against the upper jig according to the signal from the load gauge requires a relatively low speed of movement of the elevating unit, which reduces the performance potential of the entire device. Another disadvantage is the fact that the adaptability of the device for welding objects of different heights and dimensions seems to be insufficient and would require a mechanical reconstruction of the device, including the exchange of jigs.

CN116100825 A discloses a plastic welding machine which comprises a mounting table, a welding piece is arranged on the mounting table, a lifting sliding table is arranged on the mounting table, a placing plate is vertically and rotatably connected to the lifting sliding table which is controlled by a vertical adjusting piece, and two clamping plates are arranged on the placing plate; two clamping driving pieces for driving the two clamping plates to get close to each other or get away from each other are arranged on the mounting box; according to the plastic part clamping device, two clamping screw rods are driven to rotate through two driving motors, so that two telescopic threaded cylinders are driven to horizontally stretch and move, two clamping plates are close to each other, and a plastic part in a clamping cavity is clamped; two adjusting screws are driven to rotate reversely by rotating an adjusting gear, so that one top cylinder is driven to move upwards, the other top cylinder is driven to move downwards, the two sides of the bottom of the placing plate are supported by the two top cylinders to form an inclined structure, and a welding head can conveniently weld and process plastic parts at different angles.

US4515651A discloses a welding device for a hollow container and a cover.

DE10206261A1 discloses a fuel filter and pressing the filter within the fuel filter unit, and laser welding along the circumference. Also mentioned is that it may be rotated during the welding but not as automated operation. DE10206261A1 makes little mention of the device to carry out compressing of the assembly and the welding but does not disclose lifting the assembly for welding.

The object of the invention is to eliminate or at least reduce the disadvantages of the background art.

### Summary of the invention

The principle of the invention of the method for automatic welding an assembly of plastic parts is that the assembly is automatically moved from a pick-up point to a welding position by vertical lifting and a plate cover or plate separating baffle is pressed by pressure force through an internal element into a hollow container or cartridge or cylindrical housing to press the internal element between them to the desired level, whereupon the compressed assembly starts to rotate about its vertical axis and weld formation is initiated, thereby welding the plate cover or plate separating baffle and the hollow container or cartridge or cylindrical housing together around the circumference of the assembly with a defined compression of the internal element between them.

The advantages of this method for welding an assembly of plastic parts are the minimization of the number of steps in the welding procedure, their high speed and high accuracy of creating of a weld of plastic parts. By lifting the assembly vertically, it is also assigned to a pressure unit, which is pressed by a defined force, whereupon the rotary unit starts to rotate and the welding unit is started, accurate and fast weld formation is achieved without the need to use welding jigs and/or weld formation in multiple steps, e.g., formation of fixation welds and subsequent creation of a sealing weld, etc. Moreover, the pressure force can be controlled continuously, in real time, throughout the clamping and welding of the assembly, for higher precision of compressing the assembly and creating the weld. Another advantage of the above process is that the internal element of the assembly, e.g. a valve/plump rotor flap axis bearing, filter insert, bulk filler, etc., will remain in the desired location inside the assembly during the entire automatic welding process, due to the action of gravitational force and without the need for its other temporary fixation. Yet another advantage is that by moving the assembly into the welding position by vertical lifting and then starting the rotation of the rotary unit and starting the welding unit, the width of the space required to weld the assembly is minimised, so that welding can be performed within, e.g., a limited width of the space of the welding point in the existing production line, for example to replace the older, slower and less precise process of joining the plastic parts of the assembly. **The** advantage of the solution according to the present invention is an economical and space-saving method for automatic welding an assembly of plastic parts at high speed and with low defect rate, in which the plastic parts of the assembly, and possibly also other inner parts of the assembly, are pressed against each other in a controlled manner.

The principle of the device for automatic welding an assembly of plastic parts consists in that it comprises a positioning device arranged on a frame for moving the assembly from the pick-up point to the welding position, and a welding unit. The positioning device and the welding unit are coupled to the control system of the device. The positioning device is rotatable around the vertical axis of rotation, it comprises at least one sensor of the pressure force and a vertical rod which is coupled to the drive of its displacement, and at the upper end of the vertical rod there is a jaw mounted in a bearing, rotatable around the vertical axis of rotation of the positioning device. Above the jaw is arranged a rotary carrier which is coupled to the drive of its rotation, wherein the sensor of the pressure force and the drives are coupled to the control system provided with means for controlling the stroke, rotation and pressure force of the positioning device. Such device for automatic assembly welding first lifts the assembly in the direction of its vertical axis and then rotates it about its vertical axis, whereby, for assemblies of rotationally symmetrical shape, a circumferential weld is formed by a welding unit which stands in the horizontal direction, i.e., does not move in the horizontal direction, and which during welding, in the vertical direction, simultaneously either stands or moves up and down in a controlled manner. Such a device is easy to operate, operates at sufficient speed, and is not demanding in terms of the amount of the installation space, so that it can be easily incorporated into basically any production line, i.e., in place of another existing plastic joining device. A further advantage of the device is that its overall speed can optionally be increased by providing its control system and/or its pressure unit with means for controlling the drive of the vertical rod, and thus for controlling pressure force, according to the variables of the vertical rod drive, for achieving a higher vertical stroke speed, as well as by providing the control system of the device and/or its pressure unit with means for controlling the drive of the vertical rod according to the pressure force detected by the pressure force sensor, to achieve more accurate control of the pressing of the plastic parts against each other and the compression of the inner part when the assembly is assigned to the rotating and pressing unit and during the rotation of the assembly and the weld formation.

The static or variable position of the welding unit in the vertical direction during welding allows not only direct circumferential welds to be performed, but also variously shaped circumferential welds, e.g., wave-shaped, tooth-shaped, saw-shaped, etc., which affects not only the total length of the weld, but also the degree of welding of the connected parts, which has a positive influence, for example, on the strength and cohesion of the weld, etc.

This device is space- and cost-effective, allowing to achieve a high production speed with low defect rate and with a precisely defined compression of the assembly as required for the correct function of the welded assembly.

Preferred variants of embodiment of the invention are the subject of dependent patent claims and are described in more detail in the following description of examples of embodiment of the invention.

### Brief description of drawings

The invention is schematically represented in drawings, where Fig. 1 shows an assembly of plastic parts in a cross vertical section welded by the method and device according to the invention, Fig. 2 shows a flow diagram of the method for welding the assembly of plastic parts according to the invention, Fig. 3 shows a wiring diagram of the control system of the device according to the invention, Fig. 4 shows a first example of embodiment of the device for welding the assembly of plastic parts according to the invention, Fig. 5 shows a side view of a detail an example of embodiment of the device according to the invention at the moment of welding, Fig. 5a shows a basic kinematic diagram of the device according to the invention for creating a vertically shaped weld by the vertical movement of the welding unit during welding and the rotational movement of the welded parts during welding, Fig. 6 shows a second exemplary embodiment of the device according to the invention provided with a linear conveyor of assemblies to be welded, Fig. 7 shows an exemplary embodiment of a transport bed for defined placement of assemblies to be welded onto the conveyor of assemblies to be welded.

### Examples of embodiment

The invention will be described using examples of embodiment of the method and device for welding assemblies 1 of plastic parts 11.

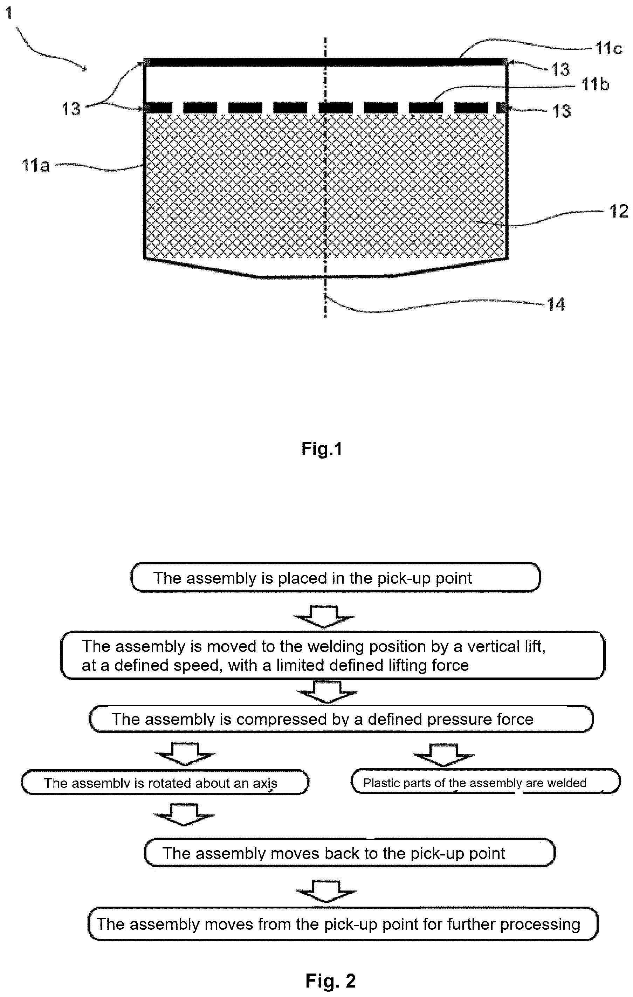

An exemplary assembly 1 of plastic parts 11 comprises a hollow cylindrical housing 11a filled with a fraction of granular material, wherein the cavity with the fraction of granular material is closed by a plate separating baffle 11b and/or a plate cover 11c, as shown in Fig. 1. A typical example of such an assembly 1 of plastic parts 11 is a protective air filter with a loose filling of filter material, e.g., in the form of a suitable size fraction of filter carbon grains.

The exemplary assembly 1 of plastic parts 11 11, 11a, 11b, 11c to be welded comprises at least two plastic parts 11, 11a, 11b, 11c, e.g., as is shown in Fig. 1, comprises a hollow container or cartridge or a cylindrical housing 11a, to which a plate cover 11c, or a plate separating baffle 11b, such as a solid plate, a porous plate, a grid, etc., is attached by welding using the method according to the present invention. The plastic parts 11 to be welded are made of ABS, polypropylene, polyethylene, etc. The assembly 1 of plastic parts 11 optionally comprises an internal element 12, which comprises, for example, a seal, a valve flap, a paper and/or textile filter filling, a loose filter filling, e.g., with activated carbon, etc.

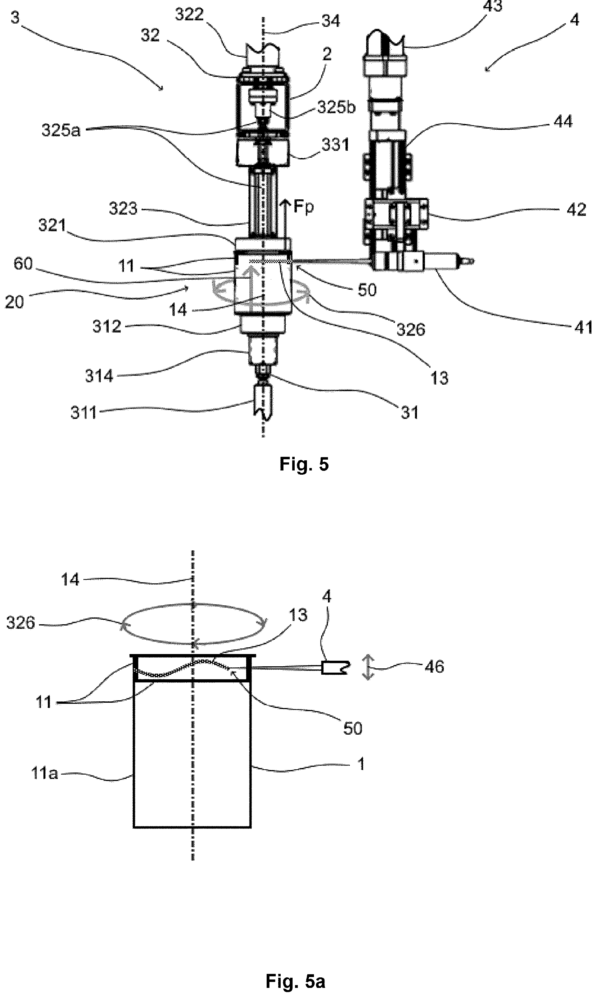

The method for automatic welding plastic parts 11, an exemplary process diagram of which is shown in Fig. 2, is performed by placing the assembly 1 in a folded state ready for welding in the pick-up point 10, from which it is subsequently lifted in the vertical direction 60 to the welding position 20. During this lifting, the plastic parts 11 of the assembly 1 are pressed against each other by a defined pressure force Fp and in this compressed state are set to rotate about the vertical axis 14. At the same time, the assembly 1 of plastic parts 11 is set by the location chosen to create a weld 13 into the welding zones 50, for example into the welding zone 50 of a laser welding unit 4, ultrasonic welding unit 4, etc. In the thus compressed state and in this defined position with respect to the welding device, the welding of the plastic parts 11 of the assembly 1 is carried out either by rotating only the assembly 1 about the vertical axis 14 with simultaneous continuous or intermittent starting of the welding unit 4 standing in place (Fig. 5), i.e. without horizontal and vertical displacement of the welding zone 50, or by simultaneously rotating the assembly 1 about the vertical axis 14 and vertical movement of the welding unit 4 (Fig. 5a), i.e., with only vertical displacement of the welding zone 50, or only with vertical movement of the welding unit 4 at the standing assembly 1, whereby a continuous or interrupted weld 13 of plastic parts 11 is formed around the circumference of the assembly 1 in the welding zone 50 of the device. Subsequently, the welded assembly 1 moves back down to the pick-up point 10, from which it is subsequently removed, usually by horizontal movement, for further processing in the next phases of the production process.

The assembly 1 rotates about the vertical axis 14 preferably at a preselected speed, either evenly or unevenly, according to the current need, e.g., according to the shape of the plastic parts 11, the orientation of the plastic parts 11, the thickness of the parts 11, etc.

To speed up the process, especially to speed up the displacement of the assembly 1 from the pick-up point 10 to the welding position 20, the assembly 1 at first moves at an increased defined speed and with a defined lifting force limitation, and only after it has entered the vicinity of the welding position 20, which is detected by initiating an increase in the magnitude of the lifting force or by an increase in the magnitude of the lifting force above the defined value or by stopping/slowing down the movement of the assembly 1, the movement to the welding position 20 is completed at a lower speed, whereby the assembly 1 is compressed by a pressure force Fp having a defined magnitude required for welding, which is greater than the lifting force.

During welding, the welding unit 4 stands still in the horizontal direction, i.e., the welding unit 4 does not move about the vertical axis 14.

According to one embodiment, the welding unit 4 stands still in the vertical direction during welding, so that the welding zone 50 and the weld 13 are arranged on the assembly 1 in the shape of a straight circumferential line, see Fig. 5, which is advantageous, e.g., for accurate and fast formation of the weld 13.

According to another exemplary embodiment, the welding unit 4 during welding moves linearly reciprocatingly in the vertical direction 46, as is shown in Fig. 5a, so that the welding zone 50 and the weld 13 are arranged on the assembly 1 in the shape of a shaped circumferential line, e.g., a curve or a broken line or another suitable desired shape, which is especially advantageous for increasing the length of the weld 13.

For better automation of the process, an identifier 8, e.g., a bar code, RFID chip, etc., is assigned to a specific assembly 1 of plastic parts 11 before the assembly 1 is placed at the pick-up point 10. The identifier 8 is loaded into the control system 9 before welding begins, ideally before the assembly 1 is moved from the pick-up point 10 to the welding position 20, and according to the loaded data, the control system 9 sets the parameters of the individual phases of the manufacturing process, including the displacement path, the pressure force, the displacement speed, the rotation speed during welding, the time schedule of the operation of the welding unit 4 and its welding performance, etc. The specific parameters of the individual phases of the process are selected by the control system 9, for example, from a pre-created parameter database, which is stored in the storage means of the control system 9, which enables assemblies 1 of different dimensions and parameters to be welded immediately one after the other while maintaining productivity and quality. In another unillustrated example of embodiment, specific welding parameters for a specific assembly 1 are determined on the basis of the machine visual identification of the specific assembly 1, including its dimensional and shape parameters, and on the basis of subsequent automatic selection and application of process parameters from the aforementioned database.

In another example of embodiment, in which the assemblies 1 of plastic parts 11 are not provided with identifiers 8, the specific parameters of the individual phases of the process are set by selecting the corresponding program, manually or automatically, according to the currently processed production batch of the same assemblies 1.

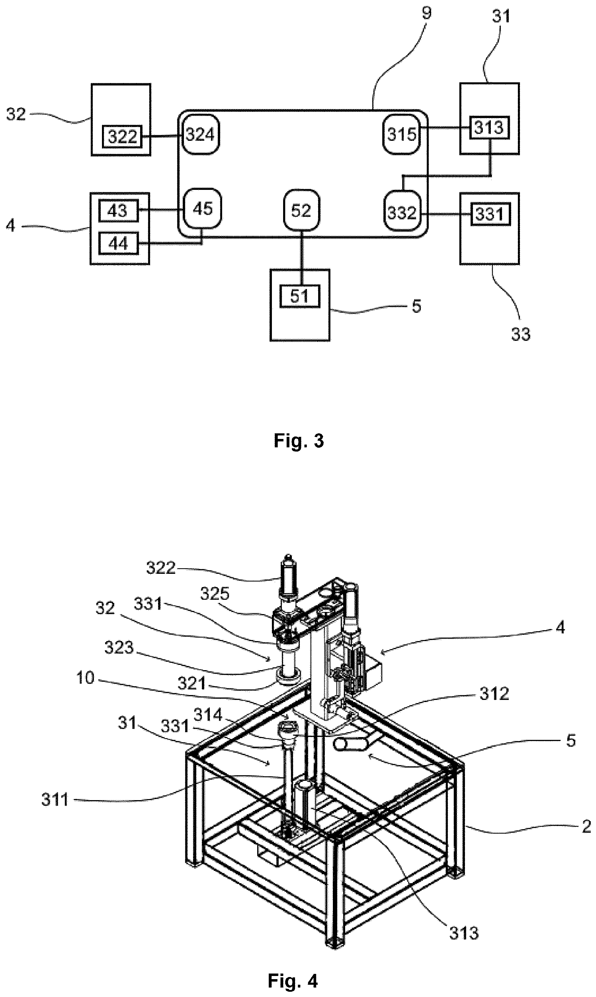

The device for automatic welding of an assembly 1 of plastic parts 11 (Figs. 3, 4, 5 and 6) comprises a frame 2 on which is arranged the positioning device 3 of the assembly 1 of plastic parts 11, which is adapted to position the assembly 1 between the pick-up point 10 and the welding position 20 in the vertical direction. The pick-up point 10 and the welding position 20 are arranged in the device as spaces to which the power elements of the device are assigned, as will be described in more detail hereinafter. The positioning device 3 is connected to the control system 9, which is preferably mounted in the frame 2 or is arranged outside the frame 2, for example being part of the control system of the production line into which the device according to the present invention is integrated, etc.

The pick-up point 10 is associated with a handling device for the supply of the assemblies 1 to the pick-up point 10 before welding and for removing the assemblies 1 from the pick-up point 10 after welding.

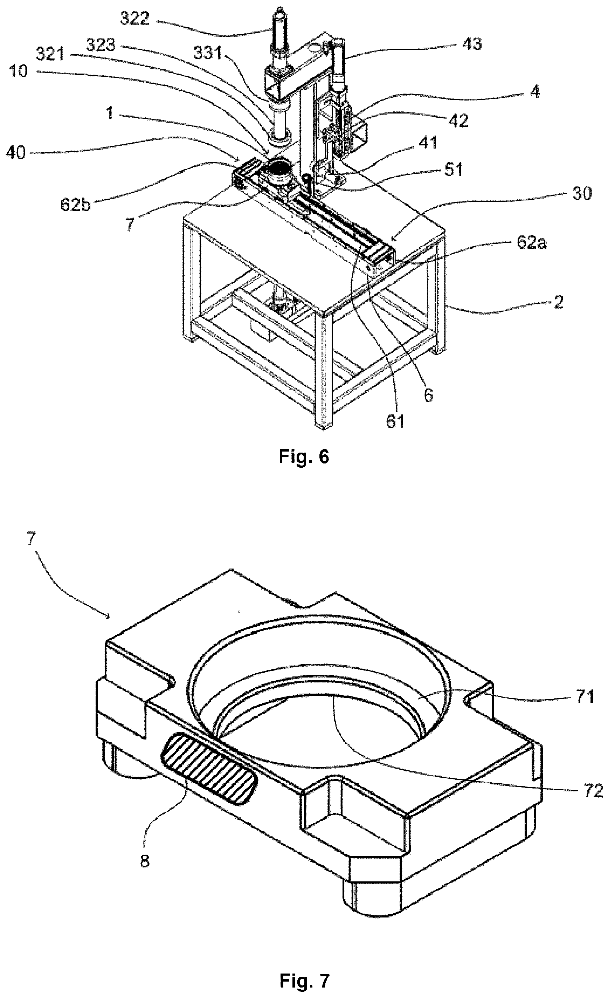

The handling device is either manual, i.e., there is a human operator who inserts and removes the assemblies 1 to and from the pick-up point 10, or the handling device consists of a suitable conveyor 6 (Figure 6), the operation of which is synchronized with the operation of the other nodes of the device, e.g., the conveyor 6 is connected to the control system 9.

The positioning device 3 comprises a lifting unit 31, a rotary unit 32 and a pressure unit 33.

The lifting unit 31 (Fig. 4) comprises a jaw 312, which is rotatable about the vertical axis 34 of the positioning device 3 and which is coupled to a drive 313, here, for example, by a vertical rod 311. The drive 313 is assigned to the control system 9 (Fig. 3), which is provided with means 315 for controlling the stroke of the lifting unit 31. The jaw 312 is assigned to the connecting line of the path between the pick-up point 10 and the welding position 20 and the lifting unit 31 is adapted for the controlled movement of the jaw 312 at least between these two positions 10, 20, preferably the minimum lower position of the jaw 312 is located below the pick-up position 10 and the maximum raised position of the jaw 312 is located above the welding position 20. In the exemplary embodiment shown, the jaw 312 is mounted rotatably about the vertical axis 34 on the vertical rod 311, in a bearing 314 of a suitable type, e.g. in a sliding bearing, in a rolling ball bearing, in a ball bearing with diagonal contact, etc. The sensor 331 of the pressure force Fp is, in the illustrated embodiment, arranged on the vertical rod 311, and is provided with a housing on which said bearing 314 of the jaw 312 is mounted.

The rotary unit 32 comprises a rotary carrier 321 (Fig. 4), which is assigned to the welding position 20 and which is coupled to a drive 322 for rotating the rotary carrier 321 about the vertical axis 34 of the positioning unit 3, wherein the drive 322 is coupled to the control system 9 (Fig. 3), which is provided with means 324 for controlling the rotation of the rotary carrier 321 about the vertical axis 34.

The rotary carrier 321 (Figs. 4 and 5) is, in the illustrated exemplary embodiment, arranged rotatably about the vertical axis 34, and is rotatably mounted in a bearing 323 of a suitable design, e.g. in a sliding bearing, in a rolling ball bearing, in a ball bearing with diagonal contact, etc., which is rigidly mounted on the frame 2. The rotary carrier 321 is coupled to the drive 322 of its rotation by a coupling 325 (Fig. 4), which is arranged to transfer the torque from the drive 322 to the rotary carrier 321 and to allow rectilinear movement of the rotary carrier 321 in the direction of the vertical axis 34. For example, the coupling 325 comprises a toothed wheel with internal gearing associated with the outer surface of a splined shaft 325a, which passes freely through the bearing 323 and is slidably arranged in a splined hub 325b, as shown in greater detail in Fig. 5. In the exemplary embodiment shown (Figs. 4 and 5), the sensor 331 of the pressure force Fp is rigidly mounted, without displacement and without rotation, on the frame 2, at one location, wherein the sensor 331 is provided with a housing, on which is mounted the above-mentioned bearing 323 of the rotary carrier 321. The advantage of such an arrangement is to increase the reliability of measurement and to simplify signal transmission from the sensor 331 to the control system 9. Moreover, the sensor 331 of the pressure force Fp, due to the coupling 325, can be configured as a load cell which works on the principle of compression.

Fig. 5 shows a positioning device 3 provided with a sensor 331 fixed on the frame 2 of the device, without the sensor 331 on the vertical rod 311. This results in achieving a reduction in the total height of the lifting unit 31, and thus a reduction in the height of the pick-up point 10, with the advantage of arranging the pick-up point 10 at a height corresponding to the horizontal level of the conveyor 6 described hereinafter (if the device is provided with the conveyor 6) and/or of the unillustrated production line, into which the device for automatic welding of the assembly 1 is incorporated.

The pressure unit 33 comprises a sensor 331 of the pressure force Fp of the jaw 312 of the lifting unit 31 against the rotary carrier 321 of the rotary unit 32. The sensor 331 is coupled to the control system 9 (Fig. 3), which is provided with means 332 for controlling the magnitude of the drive 313 force of the jaw 312 of the lifting unit 31, for controlling the lifting force and the pressure force Fp.

In an unillustrated exemplary embodiment, the pressure unit 33 comprises an individual pressure device which is coupled to its own drive, which operates separately from the drive 313 of the lifting unit 31 and which is coupled to the control system 9 which is provided with means 332 for controlling the lifting force of the drive 313 of the jaw 312 of the lifting unit 31 and for controlling the pressure force Fp of the unillustrated own drive of the pressure unit 33.

In the exemplary embodiment shown in Figs. 4 to 6, the positioning device 3 comprises at least one sensor 331 of the pressure force Fp, wherein in Fig. 4, two sensors 331 are shown, and in Figs. 5 and 6, one sensor 331 is shown, and one vertical rod 311, which is coupled to the drive 313 and is provided with a jaw 312 at its upper end. The sensor 331 of the pressure force Fp and the drive 313 are coupled to the control system 9, which is provided with means 315 for controlling the speed and the length of the movement of the jaw 312 and with means 332 for controlling the magnitude of the drive 313 force of the jaw 312 of the lifting unit 31, for lifting the assembly 1 from the pick-up point 10 to the welding position 20 by a limited lifting force, and for subsequently clamping the assembly 1 between the jaw 312 and the rotary carrier 321 in the welding position 20 with a defined pressure force Fp of the jaw 312 acting on the rotary carrier 321, which corresponds to the pressure force Fp necessary for pressing the parts 11 of the assembly 1 against each other to perform the welding.

The device for automatic welding of the assembly 1 further comprises a welding unit 4 which is arranged on the frame 2, for example next to the positioning device 3, and which the active part of which is directed to the welding zone 50 in the welding position 20. The welding unit 4 is adapted to create conditions suitable and sufficient to form a weld 13 in the welding zone 50, i.e., to weld at least two plastic parts 11 of the assembly 1 to each other, in particular it comprises a laser or ultrasonic welding head 41. The welding unit 4 is arranged on the frame 2 without the possibility of movement in the horizontal direction, i.e., in the direction about the axis 14. According to an exemplary embodiment, the welding unit 4 on the frame 2 is arranged without the possibility of movement in the vertical direction, see Fig. 5. According to another exemplary embodiment, the welding unit 4 on the frame 2 is arranged in a linearly reversibly adjustable manner, see Fig. 5a, in the vertical direction 46, e.g., the welding unit 4 is arranged on an unillustrated vertically positioning device which is coupled to the control device 9.

In the exemplary embodiment shown (Fig. 5), the welding unit 4 is formed by a laser welding unit, which comprises a power source 44 and a welding head 41, which is mounted on the frame 2 preferably in an adjustable holder 42 with at least two degrees of freedom of movement, preferably up/down and radially towards/from the welding position(s) 20, or the positioning device(s) 3. The adjustable holder 42 is optionally coupled to at least one drive 43, e.g., a manual drive or a machine drive coupled to the control system 9 (Fig. 3) provided with means 45 for controlling the welding unit 4.

In the exemplary embodiment shown in Figs. 3, 4 and 6, the device for welding the assembly 1 of plastic parts 11 is provided with an identification unit 5 of the specific assembly 1. The identification unit 5 comprises a sensor 51 of the identifier 8 which is disposed on the specific assembly 1, e.g., it comprises a barcode sensor, a QR code sensor, an RFID chip sensor, etc. The sensor 51 is coupled to the control system 9 (Fig. 3), which is provided with means 52 for identifying the specific assembly 1. In order to automatically select and set specific process parameters, the control system 9 is provided, for example, with a computer program, a control algorithm, a control circuit, etc.

In the exemplary embodiment of Fig. 6, the device for welding the assembly 1 of plastic parts 11 comprises a conveyor 6, which is assigned to the pick-up point 10 of the assembly 1, e.g., a horizontal chain conveyor, or in an unillustrated example of embodiment, a carousel conveyor, a belt conveyor, etc. The conveyor 6 is assigned by its inlet to the location 30 of the input of the assemblies 1 into the device and by its outlet to the location 40 of the outlet of the assemblies 1 of plastic parts 11 from the device. In the illustrated exemplary embodiment, in which special transport beds 7, which will be described in more detail hereinafter, are used to safely and stably accommodate the assemblies 1 in the conveyor and are shown by way of example in Fig. 7, the conveyor 6 is provided with means for inserting, moving and removing the transport beds 7, for example, the conveyor 6 is provided with a drive belt 61 of a horizontal chain conveyor 6 (Fig. 6) arranged between the inlet and outlet roller tracks 62a, 62b. In an unillustrated example of embodiment, the conveyor 6 is provided with transport bed holders 7 in the carousel conveyor, transport belts with holes or slats, etc.

The transport bed 7 (Fig. 7) in the illustrated example of embodiment comprises an opening 72 with a radially inwardly extending collar 71 for accommodating the assembly 1, the opening 72 being adapted for passage of the jaw 312 of the lifting unit 31 during its movement between the pick-up point 10 and the welding position 11. The collar 71 is sized and shaped to accommodate the assembly 1 of plastic parts 11. The lower part and/or at least one side part of the transport bed 7 is adapted to cooperate with a handling device in the form of the conveyor 6, for example as shown in Figure 6, to catch the horizontal chain conveyor 6 by the drive belt 61. Preferably, the above-mentioned identifier 8 of the specific assembly 1 is mounted on the transport bed 7.

The above-described device for automatic welding of the assembly 1 of plastic parts 11 works in such a manner that the assembly 1 is first moved to the pick-up point 10, for example, from an unillustrated magazine, by an unillustrated robotic arm or manually by an operator, or from the inlet 30 by the conveyor 6 with at least one transport bed 7 etc., and, if necessary, the identifier 8 of the specific assembly 1 is loaded and the operating parameters of the individual elements of the device are set according to the specific type and dimension of the assembly 1. Thereafter, the assembly 1 is moved from the pick-up point 10 vertically by lifting the jaws 312 to the welding position 20 towards the rotary carrier 321, the position and/or speed and/or force of the drive 313 of the lifting unit 31 being evaluated by the control system 9, thereby determining the proximity of the assembly 1 from the welding position 20. Once a predefined position and/or deceleration and/or increase in force of the drive 313 of the lifting unit 31 has been detected, compression of the assembly 1 between the jaw 312 and the rotary carrier 321 has occurred, and compression of the assembly 1 by the clamping unit 33 is initiated, thereby completing the movement of the assembly 1 to the welding position 20, and the assembly 1 is clamped in the positioning device 3 by the defined clamping force Fp required for welding. Thus, the plastic parts 11 of the assembly 1 are pressed against each other by the defined pressure force Fp required for welding with the required compression of the internal element 12 of the assembly 1. Then, by means of the drive 322 of the rotation of the rotary carrier 321, the assembly 1 is rotated about its vertical axis 14, preferably optionally in the clockwise/counterclockwise direction 326, while maintaining the compression of the assembly 1 with the defined pressure force Fp, while starting the welding unit 4 and the welding of the plastic parts 11 in the welding zone 50 is carried out. During welding, the welding unit 4 stands still in a horizontal direction, i.e., it does not move about the axis 14 or in any direction perpendicular to the axis 14. When it is necessary to accurately and quickly form a weld 13 in the form of a straight planar line, see Figure 5, the welding unit 4 also stands in the vertical direction. When it is necessary to form a vertically shaped circumferential weld 13, the welding unit 4 moves in a reciprocating linear motion in the vertical direction 46. After the welding has been performed, the welding unit 4 is switched off, the rotation of the assembly 1 is stopped and the assembly 1 is returned vertically, by the lifting unit 31 to the pick-up point 10 from where it is removed for further processing. In the exemplary embodiment of the device with the conveyor 6 and transport beds 7 (Figure 6), the welded assembly 1 is returned to the pick-up point 10 by returning to the original transport bed 7 and is moved in the transport bed 7 by the conveyor 6 to the outlet 40 of the device for further processing.

### List of references

- 1: assembly comprising plastic parts
- 11: plastic part
- 11a: hollow cylindrical housing
- 11b: plate separating baffle
- 11c: plate cover
- 12: internal element
- 13: weld
- 14: vertical axis of the assembly
- 2: frame
- 3: positioning device
- 31: lifting unit
- 311: vertical rod
- 312: jaw
- 313: drive
- 314: bearing of the jaw
- 315: means for controlling the stroke of the positioning device
- 32: rotary unit
- 321: rotary carrier
- 322: drive
- 323: bearing of the rotary carrier
- 324: means for controlling the rotation of the positioning device
- 325: coupling for torque transmission to the rotary carrier
- 325a: splined shaft
- 325b: splined hub
- 326: rotation direction
- 33: pressure unit
- 331: sensor of the pressure force
- 332: means for controlling the drive force
- 34: vertical axis of the positioning device
- 4: welding unit
- 41: welding head
- 42: adjustable holder
- 43: drive of the displacement/rotation of the welding head
- 44: source
- 45: means for controlling the welding unit
- 46: vertical direction of the movement of the welding unit
- 5: identification unit
- 51: sensor of the identifier
- 52: means for assembly identification and selection of welding parameters
- 6: conveyor
- 61: drive belt
- 62a: inlet roller track
- 62b: outlet roller track
- 7: transport bearing
- 71: collar
- 72: opening
- 8: identifier
- 9: control system of the device for welding the assembly of plastic parts
- 10: pick-up point
- 20: welding position
- 30: inlet to the device
- 40: outlet from the device
- 50: welding zone
- 60: direction of the stroke of the assembly
- Fp: pressure force

## Claims

1. A method for automatic welding of an assembly (1) of plastic parts (11), which comprises a hollow container or cartridge or cylindrical housing (11a) and a plate cover (11c) or a plate separating baffle (11b) and the assembly (1) further comprises an internal element (12) arranged between the hollow container or cartridge or cylindrical housing (11a) and the plate cover (11c) or the plate separating baffle (11b), in which the assembly (1) is first placed in the pick-up point (10), from which it is then automatically moved upwards to the welding position (20), in which the assembly (1) is automatically clamped and the parts (11) are automatically welded, whereupon the welded assembly (1) is automatically moved back to the pick-up point (10), from which it is picked up for further processing, wherein the assembly (1) is automatically moved from the pick-up point (10) to the welding position (20) by vertical lifting and the plate cover (11c) or the plate separating baffle (11b) is pressed by the pressure force (Fp) through the internal element (12) into the hollow container or cartridge or cylindrical housing (11a) to press the internal element (12) between them to the desired level, whereupon rotation of the compressed assembly (1) about its vertical axis (14) is initiated and weld (13) formation is initiated, thereby welding the plate cover (11c) or the plate separating baffle (11b) and the hollow container or cartridge or cylindrical housing (11a) together around the circumference of the assembly (1) with defined compression of the internal element (12) between them.

2. The method according to claim 1, **characterized in that** the assembly (1) first moves to the welding position (20) at an increased speed, and when an increase in resistance to this movement is detected, the speed of the movement of the assembly (1) is reduced and the assembly (1) continues to move until compression of the internal element (12) is achieved between the plate cover (11c) or the plate separating baffle (11b) and the hollow container or cartouche or cylindrical housing (11a) to the required level, whereupon the vertical movement of the assembly (1) stops.

3. The method according to any of the preceding claims, **characterized in that** the magnitude of the pressure force (Fp) is selected from the database of working parameters of the welding process according to the properties of the specific internal element (12) and according to the identifier (8) on the specific respective assembly (1).

4. The method according to any of claims 1 to 3, **characterized in that** that the welding unit (4) is stationary during the creation of the weld (13).

5. The method according to any of claims 1 to 3, **characterized in that** during the creation of the weld (13), the welding unit (4) reciprocates linearly in the vertical direction (46).

6. A device for automatic welding of an assembly (1) of plastic parts (11) by the method according to any of claims 1 to 5, which comprises a frame (2), on the frame (2) are arranged a pick-up point (10) of the assembly (1) and a welding position (20), which are interconnected through a positioning device (3), wherein a welding unit (4) is further mounted on the frame (2) and the device further comprises a control system (9) which is provided with software and to which the positioning device (3) and the welding unit (4) are coupled, wherein the positioning device (3) comprises at least one sensor (331) of the pressure force (Fp) and a vertical rod (311) which is coupled to a drive (313) of its vertical displacement, wherein at the upper end of the vertical rod (311), a jaw (312) is mounted in a bearing (314) rotatable about the vertical axis (34) of the positioning device (3), wherein above the jaw (312) is arranged a rotary carrier (321) which is coupled to a drive (322) of its rotation, wherein the sensor (331) of the pressure force (Fp) and the drives (313, 322) are coupled to a control system (9) provided with means (315, 324, 332) for controlling the stroke, rotation and pressure force (Fp) of the positioning device (3).

7. The device according to claim 6, **characterized in that** the sensor (331) of the pressure force (Fp) is arranged on a vertically rectilinear slidable rod (311).

8. The device according to any of claims 6 or 7, **characterized in that** the sensor (331) of the pressure force (Fp) is rigidly mounted with its upper side on the frame (2), wherein on its lower side is mounted a rotary coupling (321) which is coupled to the drive (322) of its rotation by means of a coupling (325) for the transmission of the torque during the simultaneous linear vertical displacement of the rotary coupling (321).

9. The device according to any of claims 6 to 8, **characterized in that** the positioning device (3) is associated with a conveyor (6) which is provided with means for inserting, transporting and removing a transport bed (7) which is provided with storage surfaces and shapes for inserting and removing the assembly (1) of plastic parts (11), wherein the transport bed (7) is provided with an identifier (8) of the specific assembly (1) of parts (11), and the device is provided with a sensor (5) of the identifiers (8) which is coupled to the control system (9) provided with a database of working parameters of the individual elements of the device for performing the welding of the parts (11).

10. The device according to any of claims 6 to 9, **characterized in that** the welding unit (4) which is coupled to the control system (9) is mounted on the frame (2) of the device without the possibility of movement in the horizontal direction during welding and at the same time it is arranged on the frame (2) either without the possibility of movement in the vertical direction, or with the possibility of controlled linear reciprocating movement in the vertical direction.

## Patentansprüche

1. Verfahren zum automatischen Verschweißen einer Baugruppe (1) von Kunststoffteilen (11), die einen Hohlbehälter oder eine Kartusche oder ein zylindrisches Gehäuse (11a) sowie einen scheibenförmigen Deckel (11c) oder eine scheibenförmige Trennwand (11b) aufweist und die Baugruppe (1) ferner ein zwischen dem Hohlbehälter oder der Kartusche oder dem zylindrischen Gehäuse (11a) und dem scheibenförmigen Deckel (11c) oder der scheibenförmigen Trennwand (11b) angeordnetes Innenelement (12) aufweist, bei dem die Baugruppe (1) zunächst in eine Entnahmestelle (10) angeordnet wird, von der sie anschließend automatisch nach oben in eine Schweißposition (20) verfahren wird, in der die Baugruppe (1) automatisch gespannt wird und die Teile (11) automatisch verschweißt werden, woraufhin die verschweißte Baugruppe (1) automatisch zurück in die Entnahmestelle (10) verfahren wird, von der sie zur weiteren Verarbeitung entnommen wird, **wo** die Baugruppe (1) von der Entnahmestelle (10) in die Schweißposition (20) durch vertikales Anheben automatisch verfahren wird und der scheibenförmige Deckel (11c) oder die scheibenförmige Trennwand (11b) mit einer Anpresskraft (Fp) über das Innenelement (12) in den Hohlbehälter oder die Kartusche oder das zylindrische Gehäuse (11a) gedrückt wird, um das Innenelement (12) zwischen diesen auf ein gewünschtes Maß zusammenzudrücken, woraufhin die Drehung der zusammengedrückten Baugruppe (1) um ihre vertikale Achse (14) und die Bildung einer Schweißnaht (13) eingeleitet werden, wodurch der scheibenförmige Deckel (11c) oder die scheibenförmige Trennwand (11b) und der Hohlbehälter oder die Kartusche oder das zylindrische Gehäuse (11a) entlang des Umfangs der Baugruppe (1) mit einem definierten Zusammendrücken des Innenelements (12) zwischen ihnen miteinander verschweißt werden.

2. Verfahren nach dem Anspruch 1, **dadurch gekennzeichnet, dass** sich die Baugruppe (1) zunächst mit erhöhter Geschwindigkeit in die Schweißposition (20) bewegt und nach Erkennung eines Anstiegs des Widerstands gegen diese Bewegung die Bewegungsgeschwindigkeit der Baugruppe (1) verringert wird und sich die Baugruppe (1) weiter bewegt, bis das Zusammendrücken des Innenelements (12) zwischen dem scheibenförmigen Deckel (11c) oder der scheibenförmigen Trennwand (11b) und dem Hohlbehälter oder der Kartusche oder dem zylindrischen Gehäuse (11a) auf das gewünschte Maß erreicht ist, woraufhin die vertikale Bewegung der Baugruppe (1) gestoppt wird.

3. Verfahren nach einem der vorangehenden Ansprüche, **dadurch gekennzeichnet, dass** die Größe der Anpresskraft (Fp) aus einer Datenbank von Arbeitsparametern des Schweißprozesses entsprechend den Eigenschaften des jeweiligen Innenelements (12) und anhand eines Identifikators (8) auf der jeweiligen Baugruppe (1) ausgewählt wird.

4. Verfahren nach einem der Ansprüche 1 bis 3, **dadurch gekennzeichnet, dass** die Schweißeinheit (4) während der Bildung der Schweißnaht (13) unbeweglich ist.

5. Verfahren nach einem der Ansprüche 1 bis 3, **dadurch gekennzeichnet, dass** sich die Schweißeinheit (4) während der Bildung der Schweißnaht (13) umkehrbar linear in vertikaler Richtung (46) bewegt.

6. Vorrichtung zum automatischen Verschweißen einer Baugruppe (1) von Kunststoffteilen (11) durch Verfahren nach einem der Ansprüche 1 bis 5, die einen Rahmen (2) aufweist, an dem Rahmen (2) sind eine Entnahmestelle (10) der Baugruppe (1) und eine Schweißposition (20) angeordnet, die durch eine Positioniereinrichtung (3) miteinander verbunden sind, wobei am Rahmen (2) ferner eine Schweißeinheit (4) gelagert ist und die Vorrichtung weiterhin ein mit Software ausgestattetes Steuerungssystem (9) aufweist, mit dem die Positioniereinrichtung (3) und die Schweißeinheit (4) gekoppelt sind, **wo** die Positioniereinrichtung (3) mindestens einen Sensor (331) der Anpresskraft (Fp) sowie eine vertikale Stange (311) aufweist, die mit einem Antrieb (313) für ihre vertikale Verstellung gekoppelt ist, und an deren oberem Ende in einem Lager (314) eine Backe (312) drehbar um die vertikale Achse (34) der Positioniereinrichtung (3) gelagert ist, über der ein Rotationsmitnehmer (321) angeordnet ist, der mit einem Antrieb (322) seiner Rotation gekoppelt ist, wobei der Sensor (331) der Anpresskraft (Fp) sowie die Antriebe (313, 322) mit dem Steuerungssystem (9) gekoppelt sind, das die Mittel (315, 324, 332) zur Steuerung des Hubs, der Rotation und der Anpresskraft (Fp) der Positioniereinrichtung (3) aufweist.

7. Vorrichtung nach dem Anspruch 6, **dadurch gekennzeichnet, dass** der Sensor (331) der Anpresskraft (Fp) an der vertikal geradlinig verschiebbaren Stange (311) angeordnet ist.

8. Vorrichtung nach einem der Ansprüche 6 oder 7, **dadurch gekennzeichnet, dass** der Sensor (331) der Anpresskraft (Fp) mit seiner Oberseite fest am Rahmen (2) gelagert ist, wobei an seiner Unterseite der Rotationsmitnehmer (321) drehbar gelagert ist, der über eine Kupplung (325) zur Übertragung des Drehmoments bei gleichzeitigem linearem vertikalem Vorschub des Rotationsmitnehmers (321) mit dem Antrieb (322) seiner Rotation gekoppelt ist.

9. Vorrichtung nach einem der Ansprüche 6 bis 8, **dadurch gekennzeichnet, dass** der Positioniereinrichtung (3) ein Förderer (6) zugeordnet ist, der die Mittel zum Einsetzen, Transportieren und Entnehmen eines Transportbetts (7) aufweist, das die Ablageflächen und Formen zum Einsetzen und Entnehmen der Baugruppe (1) von Kunststoffteilen (11) aufweist, wobei das Transportbett (7) einen Identifikator (8) der jeweiligen Baugruppe (1) von Teilen (11) aufweist und die Vorrichtung einen Sensor (5) der Identifikatoren (8) aufweist, der mit dem Steuerungssystem (9) gekoppelt ist, das eine Datenbank von Arbeitsparametern der einzelnen Vorrichtungselemente zur Durchführung des Verschweißens der Teile (11) aufweist.

10. Vorrichtung nach einem der Ansprüche 6 bis 9, **dadurch gekennzeichnet, dass** die mit dem Steuerungssystem (9) gekoppelte Schweißeinheit (4) am Rahmen (2) der Vorrichtung ohne Bewegungsmöglichkeit in horizontaler Richtung während des Schweißens gelagert ist und gleichzeitig am Rahmen (2) entweder ohne Bewegungsmöglichkeit in vertikaler Richtung oder mit der Möglichkeit einer linear umkehrbaren gesteuerten Bewegung in vertikaler Richtung angeordnet ist.

## Revendications

1. Procédé de soudage automatique d'un ensemble (1) de pièces en plastique (11), qui comprend un récipient creux, une cartouche ou un manchon cylindrique (11a) et un couvercle en forme de plateau (11c) ou une cloison de séparation en forme de plateau (11b), l'ensemble (1) comprenant en outre un élément interne (12) situé entre le récipient creux, la cartouche ou le manchon cylindrique (11a) et le couvercle en forme de plateau (11c) ou la cloison de séparation en forme de plateau (11b), où l'ensemble (1) est d'abord placé dans une station de prélèvement (10), d'où il est ensuite automatiquement déplacé vers le haut jusqu'à la position de soudage (20), où l'ensemble (1) est automatiquement serré et les pièces (11) sont automatiquement soudées, après quoi l'ensemble soudé (1) est automatiquement ramené au poste de prélèvement (10), d'où il est retiré pour un traitement ultérieur **;** de ce poste de prélèvement (10) à la position de soudage (20) par un mouvement de levage vertical et le couvercle en forme de plateau (11c) ou la cloison de séparation en forme de plateau (11b) est pressé, par une force de pression (Fp), à travers l'élément interne (12) dans le récipient creux, la cartouche ou le manchon cylindrique (11a) afin de comprimer l'élément interne (12) entre eux jusqu'au niveau requis, après quoi la rotation de l'ensemble comprimé (1) autour de son axe vertical (14) commence et la formation de la soudure (13) s'engage, ce qui soude le couvercle en forme de plateau (11c) ou la cloison de séparation en forme de plateau (11b) et le récipient creux, la cartouche ou le manchon cylindrique (11a) sont soudés les uns aux autres sur le pourtour de l'ensemble (1), avec une compression définie de l'élément interne (12) entre eux.

2. Procédé selon la revendication 1, **caractérisé en ce que** l'ensemble (1) se déplace d'abord à une vitesse accrue vers la position de soudage (20) et, après détection d'une augmentation de la résistance à ce mouvement, la vitesse de déplacement de l'ensemble (1) est réduite et l'ensemble (1) continue à se déplacer jusqu'à ce que l'élément interne (12) soit comprimé, au niveau souhaité, entre le couvercle en forme de plateau (11c) ou la cloison de séparation en forme de plateau (11b) et le récipient creux, la cartouche ou le manchon cylindrique (11a), après quoi le mouvement vertical de l'ensemble (1) s'arrête.

3. Procédé selon l'une des revendications précédentes, **caractérisé en ce que** la valeur de la force de pression (Fp) est sélectionnée à partir d'une base de données de paramètres de travail du processus de soudage en fonction des propriétés de l'élément interne (12) concerné et de l'identifiant (8) attribué à l'ensemble (1) concerné.

4. Procédé selon l'une des revendications de 1 à 3, **caractérisé en ce que,** lors de la formation du joint de soudure (13), l'unité de soudage (4) est immobile.

5. Procédé selon l'une des revendications de 1 à 3, **caractérisé en ce que,** lors de la formation du joint de soudure (13), l'unité de soudage (4) effectue un mouvement linéaire de rappel dans le sens vertical (46).

6. Dispositif pour le soudage automatique d'un ensemble (1) de pièces en plastique (11) selon l'un des revendications de 1 à 5, comprenant un châssis (2) sur lequel est disposé un point de prélèvement (10) de l'ensemble (1) avec des positions de soudage (20) sur le châssis (2) reliées par un dispositif de positionnement (3), le châssis (2) supportant en outre une unité de soudage (4) et le dispositif comprenant également un système de commande (9) équipé d'un logiciel, auquel sont couplés le dispositif de positionnement (3) et l'unité de soudage (4), **où** le dispositif de positionnement (3) comprend au moins un capteur (331) de force de pression (Fp) et une tige verticale (311) couplée à un entraînement (313) assurant son déplacement vertical ; dans un palier (314) à l'extrémité supérieure de la tige verticale (311) est montée une mâchoire (312) de manière à pouvoir tourner autour de l'axe vertical (34) du dispositif de positionnement (3), au-dessus de laquelle est disposé un entraîneur rotatif (321) qui est couplé à un entraînement (322) assurant sa rotation, le capteur (331) de force de pression (Fp) et les entraînements (313, 322) sont couplés à un système de commande (9) muni de moyens (315, 324, 332) pour commander la course, la rotation et la force de pression (Fp) du dispositif de positionnement (3).

7. Dispositif selon la revendication 6, **caractérisé en ce que** le capteur (331) de force de pression (Fp) est disposé sur une tige (311) coulissant verticalement en ligne droite.

8. Dispositif selon l'une des revendications 6 ou 7, **caractérisé en ce que** le capteur (331) de force de pression (Fp) est monté de manière fixe par sa face supérieure sur le châssis (2), tandis que, sur sa face inférieure, est monté de manière rotative un entraîneur rotatif (321), qui est couplé à l'entraînement (322) de sa rotation par l'intermédiaire d'un accouplement (325) destiné à transmettre le couple tout en assurant un déplacement linéaire vertical de l'entraîneur rotatif (321).

9. Dispositif selon l'une des revendications de 6 à 8, **caractérisé en ce qu'**au dispositif de positionnement (3) est associé un convoyeur (6) muni de moyens pour l'insertion, le transport et le retrait du plateau de transport (7), lequel est muni de surfaces de support et de profils permettant l'insertion et le retrait d'un ensemble (1) de pièces en plastique (11) ; le plateau de transport (7) est muni d'un identifiant (8) correspondant à un ensemble spécifique (1) de pièces (11) et le dispositif est muni d'un capteur (5) d'identifiants (8), qui est couplé à un système de commande (9) qui est muni d'une base de données contenant les paramètres de travail des différents éléments du dispositif pour réaliser le soudage des pièces (11).

10. Dispositif selon l'une des revendications de 6 à 9, **caractérisé en ce que** l'unité de soudage (4) couplée au système de commande (9) est montée sur le châssis (2) du dispositif sans possibilité de déplacement dans le sens horizontal pendant le soudage et, simultanément, l'unité est disposée sur le châssis (2) soit sans possibilité de déplacement dans le sens vertical, soit avec la possibilité d'un mouvement linéaire réversible et contrôlé dans le sens vertical.
